**Europäisches Patentamt**

**European Patent Office**

**Office européen des brevets**

(11) Veröffentlichungsnummer: **0 155 520
B1**

(12) **EUROPÄISCHE PATENTSCHRIFT**

(45) Veröffentlichungstag der Patentschrift:
20.04.88

(51) Int. Cl.⁴: **C 04 B  16/06**

(21) Anmeldenummer: 85101830.9

(22) Anmeldetag: 20.02.85

(54) **Fasermischung für die Verstärkung von Werkstoffen, insbesondere für die Verstärkung von hydraulischen Bindemitteln, Verwendung der Mischung und unter Verwendung der Mischung hergestellte Formteile.**

(30) Priorität: 01.03.84  CH 1017/84

(43) Veröffentlichungstag der Anmeldung:
25.09.85 Patentblatt 85/39

(45) Bekanntmachung des Hinweises auf die Patenterteilung:
20.04.88 Patentblatt 88/16

(84) Benannte Vertragsstaaten:
AT BE DE FR GB IT NL SE

(56) Entgegenhaltungen:
DE - A - 2 128 935
FR - A - 2 409 244
GB - A - 2 075 076

(73) Patentinhaber: AMETEX AG, Eternitstrasse 3,
CH-8867 Niederurnen (CH)

(84) Benannte Vertragsstaaten: DE SE

(73) Patentinhaber: REDCO SA, B-2920 Kapelle-op-den-Bos (BE)

(84) Benannte Vertragsstaaten: BE GB NL

(73) Patentinhaber: S.A. Financière Eternit, 33, rue d'Artois, F-75008 Paris (FR)

(84) Benannte Vertragsstaaten: FR IT

(73) Patentinhaber: Eternit-Werke Ludwig Hatschek AG, A-4840 Vöcklabruck (AT)

(84) Benannte Vertragsstaaten: AT

(72) Erfinder: Studinka, Joseph, Dr., Dolderstrasse 92,
CH-8032 Zürich (CH)
Erfinder: Meier, Peter, Dr., Pfannenstielstrasse 18,
CH-8820 Wädenswil (CH)

(74) Vertreter: Scheidegger, Zwicky, Werner & Co.,
Stampfenbachstrasse 48 Postfach, CH-8023 Zürich (CH)

**Beschreibung**

Die vorliegende Erfindung betrifft eine Fasermischung zur Herstellung von faserverstärkten Werkstoffen, wie z. B. von hydraulisch abbindenden Materialien, insbesondere eines Zementmaterials, welches als Verstärkungsfasern, Polyacrylnitrilfasern und Polyvinylalkoholfasern enthält. Die Erfindung betrifft ferner die Verwendung solcher Fasermischungen bei der Herstellung von Formkörpern nach der Formgebung aushärtenden Werkstoffen.

Die Polyacrylnitrilfasern werden nachstehend jeweils als PAN-Fasern und die Polyvinylalkoholfasern als PVA-Fasern bezeichnet.

Es ist allgemein bekannt, dass sich aus wässrigen Aufschlämmungen, bestehend z. B. aus Asbest und Zement, mit Hilfe von Entwässerungsmaschinen, z. B. Hatschek-Maschinen oder mittels Injektionsverfahren auf verschiedenste Weise geformte Bauteile, wie Dachplatten, Wellplatten, Rohre oder Gartenartikel herstellen lassen. Solche Bauteile konnten sich während der letzten Jahrzehnte einen dominanten Platz unter den Baumaterialien sichern. In den letzten Jahren wurde jedoch zunehmend klar, dass der wichtigste Rohstoff zur Herstellung dieser Produkte, nämlich Asbest, aus den verschiedensten Gründen wie Verfügbarkeit, preisliche Entwicklung sowie wegen gesundheitlicher Aspekte nicht mehr lange für diesen Einsatz zur Verfügung stehen wird. Auf der einzigartigen Eigenschaftskombination von Asbestfasern beruhen nicht nur die bekannten ausgezeichneten Gebrauchseigenschaften von Asbestzement, vielmehr bilden sie auch die Grundlage des weltweit verbreiteten Hatschek-Entwässerungsverfahrens.

All die oben erwähnten Umstände setzen seit einigen Jahren eine intensive Forschungstätigkeit in Gang, welche zur Aufgabe hatte, Ersatzfasern zu finden, welche in den bestehenden Produktionsprozessen der Entwässerungsverfahren den Asbest vollkommen ersetzen können. Es zeigte sich jedoch sehr rasch, dass keine einzige Faserart auffindbar war, welche sämtliche positiven Eigenschaften von Asbest in sich vereinigte.

Es sind vor allem folgende Eigenschaften, die Asbest zugleich als ausgezeichnete Prozess- und als Verstärkungsfaser auszeichnen:
- hohe spezifische Oberfläche
- gute Dispergierbarkeit
- ausgezeichnete chemische Beständigkeit
- hohes Zementrückhaltevermögen
- gutes Vliesbildungsvermögen
- hohe Zugfestigkeit
- hoher Elastizitätsmodul
- geringe Bruchdehnung

Als Prozesshilfsmittel zeigt Asbest eine ausgezeichnete Verteilbarkeit in einer wässrigen Zementaufschlämmung. Während des Entwässerungsschrittes vermag Asbest dank des guten Filtrationsvermögens und der guten Zementaffinität den Zement im entstehenden Verbundstoff zurückzuhalten. Im hydratisierten Endprodukt wirkt sich die hohe Zugfestigkeit, verbunden mit dem hohen E-Modul und der geringen Bruchdehnung positiv aus, was den Asbestzement-Produkten die bekannte hohe Biegezugfestigkeit zu verleihen vermag.

Da weder natürliche noch synthetische Fasern mit der Eigenschaftskombination von Asbest gefunden werden konnten, haben die Forschungsanstrengungen zur Suche nach möglichen Ersatzprodukten ergeben, dass entsprechend den beiden Hauptfunktionen von Asbest, Fasermischungen eingesetzt werden müssen, um mit diesen neuen Fasern auf den bestehenden Anlagen Faserzement produzieren zu können (siehe z. B. DE-PS-3 002 484 von Amiantus). Die Filtrationseigenschaften von Asbest können durch Zusätze von Zellstoffen und/oder synthetischen Fibriden in den Fasermischungen simuliert werden. Für die Verstärkungswirkung werden Armierungsfasern eingesetzt. Solche Fasern können. organische oder anorganische Hochmodulfasern sein, welche üblicherweise in Schnittlängen 4–12 mm zugegeben werden.

Es gibt wohl kaum eine Synthesefaser, welche nicht schon auf diesen Einsatzzweck hin als Zementverstärkungsfaser überprüft worden wäre. Die meisten Fasern haben sich jedoch aus den verschiedensten Gründen, wie ungenügende chemische Beständigkeit, schlechte Zementaffinität, ungenügende mechanische Eigenschaften, oder wegen des zu hohen Preises, nicht durchsetzen können. Aus dem gesamten Faserangebot haben sich bis heute nur zwei Synthesefasertypen durchsetzen können, welche den Anforderungen einer Zementarmierungsfaser genügen. Eine der Fasern wurde auf der Basis von Polyacrylnitril entwickelt und ist zum Beispiel von der Firma Hoechst (BRD) unter der Handelsmarke «Dolan 10» in den Handel gebracht worden (siehe auch CH-PS..., Patentanmeldung Nr. 1 919/81-8). Die andere Faser ist auf der Basis von Polyvinylalkohol aufgebaut und z. B. unter der Marke «Kuralon» bei der Firma Kurarai, Japan, erhältlich (DE-PS-2 850 337). Die wichtigsten Eigenschaften dieser Fasern sind in Tabelle 1 zusammengestellt.

Tabelle 1
Textilmechanische Eigenschaften von für die Zementverstärkung geeigneten Fasertypen:

| Fasertyp | Reissfestigkeit cN/dtex | Bruchdehnung % | E-Modul cN/dtex |
|---|---|---|---|
| Polyacrylnitril, PAN (z. B. «Dolan 10») | 6,0–8,5 | 10–16 | min. 130 |
| Polyvinylalkohol PVA (z. B. «Kuralon») | 10–15 | 5,5–15 | min. 175 |

Der Vergleich der textilmechanischen Eigenschaften der PVA- mit den PAN-Fasern zeigt, dass PVA-Fasern die besseren mechanischen Eigenschaften aufweisen. Werden nun 6 mm Faserschnitte dieser beiden Typen in einer wässrigen Zementaufschlämmung verteilt und auf einer Filterpresse zu Faserzementplättchen verarbeitet, so zeigt sich an den gemessenen Festigkeiten der Plättchen, dass die besseren Fasereigenschaften auch dem Endprodukt höhere Festigkeiten zu verleihen vermögen (Tab. 2).

Tabelle 2
Festigkeitswerte von Faserzement-Plättchen, hergestellt auf einer Filterpresse, aus Portlandzement und den Hochmodulfasern auf Basis PVA und PAN

| Fasern | Biege-zug-festigkeit (nach ISO) | Bruch-arbeit | Dichte | Wasser-aufnahme |
|---|---|---|---|---|
| % Gew. | N/mm$^2$ | kJ/m$^2$ | g/ccm | % |
| PAN Fasern | | | | |
| 1,0 | 12,5 | 0,203 | 1,982 | 15,0 |
| 1,5 | 14,7 | 0,457 | 1,920 | 14,5 |
| 2,0 | 16,0 | 0,701 | 1,851 | 15,7 |
| PVA Fasern | | | | |
| 1,0 | 14,8 | 0,652 | 1,935 | 14,6 |
| 1,5 | 16,1 | 1,208 | 1,900 | 15,1 |
| 2,0 | 19,5 | 1,835 | 1,863 | 16,0 |

Textilmechanische Eigenschaften der verwendeten Fasern

| | Zug-festigkeit cN/dtex | E-Modul cN/dtex | Bruch-dehnung % | Titer dtex |
|---|---|---|---|---|
| PAN | 7,5 | 150 | 11 | 3,0 |
| PVA | 12 | 240 | 6 | 2,0 |

Die Brucharbeit stellt eine sehr wichtige materialtechnologische Eigenschaft dar. Sie macht Aussagen über die Sprödheit, respektive die Schlagzähigkeit eines Produktes. In der Praxis kann sich das so auswirken, dass zum Beispiel beim Verlegen von Dachplatten mit verschieden hohen Werten für die Brucharbeit, aber mit identischen Biegefestigkeiten, unter der Belastung durch den Dachdecker in einem Fall die Platten ohne Vorwarnung plötzlich brechen (Sprödbruch), im zweiten Fall aber die Belastung durch eine höhere Durchbiegung aufgefangen wird.

Die Analyse der Resultate zeigt, dass die PVA-Fasern mit den besseren textilmechanischen Eigenschaften der Faserzementplättchen nicht nur eine höhere Biegezugfestigkeit zu verleihen vermögen, sondern dass auch die Brucharbeit sehr viel höher liegt, als im Falle der PAN-Fasern. Die Brucharbeit bei diesen Versuchen ist definiert als die Fläche unter der Spannungs-Dehnungskurve bis zu dem Punkte, wo die maximale Biegezugfestigkeit erreicht wird, d.h. die Platte gerissen ist.

In Kenntnis der Zusammenhänge zwischen den Faserdaten und der resultierenden Produkteigenschaften der Faserzementplatten wäre es einfach, Faserzementprodukte, an welche sehr hohe Anforderungen gestellt werden bezüglich Biegefestigkeit, Schlagzähigkeit und Brucharbeit, ausschliesslich unter der Verwendung von PVA-Fasern herzustellen. Dieser Lösung stehen aber die hohen Preise für PVA-Fasern entgegen. Wegen der hohen Rohmaterialkosten, verbunden mit einem sehr aufwendigen Fadenherstellungsprozess, liegen die Kosten für die Herstellung von PVA-Fasern etwa 50 bis 100% höher als für PAN-Fasern. Bedenkt man zudem, dass die gegenwärtigen Asbestpreise nur einen Bruchteil der Synthesefaserpreise betragen, so ist es offensichtlich, dass dem Faserpreis eine entscheidende Bedeutung zukommen muss, damit überhaupt noch wirtschaftliche Faserzement-Produkte hergestellt werden können. Es wäre also für die Faserzement-Industrie in höchstem Masse wünschenswert, eine Faser mit den Eigenschaften der beschriebenen PVA-Fasern zu finden, welche aber wirtschaftlich tragbar, d.h. nicht wesentlich teurer als die PAN-Faser ist.

Gemäss der für faserarmierte Verbundwerkstoffe gültigen Mischungsregel wäre es zu erwarten, dass im Falle von Faserabmischungen die für den verstärkten Werkstoff resultierenden Festigkeiten, resp. Brucharbeit linear und proportional dem Mischungsverhältnis folgt (vgl. «Fiber-Reinforced Cement Composites», Technical Report 51.067, The Concrete Society, Terminal House, Grosvenor Gardens, London 1973, und H. Krenchel «Fiber Reinforcement», Akademisk Foralg Copenhagen, 1964).

Es wurde nun überraschenderweise gefunden, dass ein sehr hoher Anteil an PVA-Fasern durch billige PAN-Fasern substituiert werden kann, ohne dass im Faserzementprodukt eine Einbusse der positiven Eigenschaften zu beobachten wäre.

Die erfindungsgemässe Mischung aus PVA- und PAN-Fasern ist dadurch gekennzeichnet, dass sie möglichst wenig, mindestens jedoch 10% PVA-Fasern, enthält.

Die erfindungsgemässen Fasermischungen sollen gemäss den nachfolgenden praktischen Versuchsbeispielen noch näher erläutert werden.

Als geeignete Fasern für erfindungsgemässe Abmischungen von PAN- mit PVA-Fasern eignen sich Hochmodul Polyacrylnitrilfasern, welche einen E-Modul von minimum 15,0 cN/dtex, eine Bruchdehnung von höchstens 16% und eine Zugfestigkeit von mindestens 6 cN/dtex aufweisen.

Geeignete Polyvinylalkohol-Fasern sind Hochmodulfasern mit folgenden Spezifikationen:

E-Modul von mindestens 175 cN/dtex, Bruchdehnung von maximal 15% und eine Zugfestigkeit von mindestens 10 cN/dtex.

Beide Faserarten können mit einheitlichen Titern oder als Mischungen von Fasern unterschiedlichen Titers eingesetzt werden. Bevorzugt werden aber Fasern im Bereich von 0,5–5,0 dtex angewendet. Die Fasern können entweder zu exakten, einheitlichen Längen geschnitten werden oder aber gemahlen oder in verschiedenen Längen abgemischt vorliegen. Bevorzugt werden die PVA-Fasern in Längen von 4–15 mm und die PAN-Fasern in 2 bis 12 mm eingesetzt.

Die nachfolgenden Beispiele werden zeigen, dass es besonders vorteilhaft ist, wenn die eingesetzten PVA-Fasern ca. 1/3 länger als die zugemischten PAN-Fasern sind.

Als mögliche Herstellungsverfahren für Bauteile, in welchen die erfindungsgemässen Fasermischungen eingesetzt werden, eignen sich z. B. Entwässerungsverfahren mittels Rund- oder Langsiebmaschinen, aber auch Monostranganlagen, Injektionsanlagen oder Filterpressen.

Mischungen, welche sich für die Verarbeitung auf den erwähnten Anlagen eignen, enthalten in einer wässrigen Suspension neben den erfindungsgemässen Faserabmischungen, auch ein Bindemittel, wie z. B. Zement und gegebenenfalls zusätzliche faserige Stoffe mit Filtereigenschaften sowie verschiedene Füll- oder Zuschlagstoffe.

Als Bindemittel eignen sich hydraulische anorganische Bindemittel wie Zement, Gips, Erdalkalisilikate oder Erdalkalialuminate. Es lassen sich aber auch organische Bindemittel wie z. B. Kunstharze verwenden. Als Füll- und Zuschlagstoffe eignen sich z. B. Quarzsand, Hochofenschlacke, Flugasche, Puzzolane, Mica, Steinmehl. Als Hilfsfasern, welche dazu dienen, Bindemittel und Füllstoffe auf den Sieben zurückzuhalten, können Zellstofffasern in Form von Sulfatzellstoff, Holzschliff, thermomechanischem Pulp und/oder synthetische Fibride auf der Basis von Kunststoffen, wie z. B. Polyäthylen, eingesetzt werden. Das Retentionsvermögen lässt sich zusätzlich durch den Einsatz von Flockungsmitteln, z. B. auf der Basis von Polyacrylamiden weiter verbessern.

Produkte, welche sich mit diesen Mischungen auf den Entwässerungsanlagen herstellen lassen, sind z. B. ebene Platten, Wellplatten, Rohre oder geformte Artikel wie z. B. Gartenartikel.

Die erfindungsgemässen PVA-/PAN-Fasermischungen sollen nachfolgend in einigen Anwendungsbeispielen genauer erklärt werden.

a) Herstellung der Faserzementplatten für Versuchszwecke

Die Versuche wurden auf einer Rundsieb-Entwässerungsmaschine Typ Hatschek durchgeführt.

In einem separaten Pulper wurden die Faser-Zementaufschlämmungen mit einem Feststoffgehalt von 80 g/l vorbereitet und von dort kontinuierlich in den Stoffkasten einer Hatschekmaschine gepumpt.

Kurz vor dem Einlaufen in den Stoffkasten wurden noch 200 ppm eines Flockungsmittels Typ Polyacrylamid zur Verbesserung der Zementretention zudosiert. Auf der Maschine wurden mit 22 Umdrehungen der Formatwalze Platten von ca. 6 mm hergestellt, welche zwischen geölten Blechen während 60 min in einer Stapelpresse bei einem spezifischen Pressdruck von 250 bar auf eine Dicke von 4,8 mm gepresst wurden. Von allen Varianten wurden auch ungepresste Proben hergestellt und geprüft. Die Abbindungen der Faserzementplatten erfolgte während 25 Tagen in einer Feuchtekammer von 100% r.F. bei 20 °C. Nachdem die Platten noch zusätzlich während 3 Tagen unter Wasser gelagert worden waren, wurden die Prüfungen in nassem Zustand vorgenommen.

Die Versuche, bei welchen Faserzementplatten, bestehend nur aus der erfindungsgemässen Fasermischung und Zement, d. h. ohne Filterhilfsstoffe hergestellt wurden, sind auf einer Filterpresse fabriziert worden.

b) Verwendete Mischungen
Für Herstellung auf Filterpresse:

Portlandzement (2800 Blaine) 100 Teile
Fasermischungen 2,0 Teile
Für Herstellung im Hatschek-Verfahren:
Portlandzement (2800 Blaine) 100 Teile
Altpapier (45° SR) 3,5 Teile
Polyäthylenfibrid («Pulpex» E–A, Hercules USA) 2,0 Teile
Fasermischungen 2,0 Teile

Als Fasermischungen wurden folgende Varianten eingesetzt:

| PAN | 2 | 1,7 | 1,3 | 1,0 | 0,7 | 0 | Teile |
|-----|---|-----|-----|-----|-----|---|-------|
| PVA | 0 | 0,3 | 0,7 | 1,0 | 1,3 | 2,0 | Teile |

Die textiltechnischen Eigenschaften der verwendeten Fasern waren:
– PAN
Titer 1,5 dtex, Zugfestigkeit 7,2 cN/dtex, E-Modul 140 cN/dtex, Bruchdehnung 9%
– PVA
Titer 2 dtex, Zugfestigkeit 12,5 cN/dtex, E-Modul 250 cN/dtex, Bruchdehnung 6,5%

PAN-Fasern und PVA-Fasern wurden in verschiedenen Kombinationen in 4 und 6 mm Schnittlängen eingesetzt.

Für die Versuche auf der Filterpresse wurden Mischungen, bestehend nur aus Portlandzement und den PVA/PAN-Fasern, in Wasser hergestellt.

c) Prüfung der Faserzementplatten
Die Prüfungen der Versuchsplatten erfolgte mit Hilfe einer Wolpert Prüfmaschine mit Dreipunkt-Auflage an Platten von 25×25 cm. Die Auflagedistanz betrug 167 mm und die Prüfgeschwindigkeit 26 mm/min. Die Auswertung der Resultate wurde mit Hilfe eines angeschlossenen Computers vorgenommen.

d) Ergebnisse
Die Resultate sind in den Tabellen 3 bis 7 zusammengestellt.

Tabelle 3
Prüfresultate von Faserzement-Plättchen mit variablen PVA-PAN-Faser-Verhältnissen, hergestellt auf einer Hatschekmaschine

| Fasermischung PAN, PVA, 6mm 6mm Teile Teile | | Bie-gezug-festig-keit N/mm² | Bruch-arbeit kJ/m² | Dichte g/ccm | Wasser-aufnahme % |
|---|---|---|---|---|---|
| **gepresste Platten** | | | | | |
| – | 2,0 | 22,4 | 3,047 | 1,941 | 12,3 |
| 0,3 | 1,7 | 21,1 | 2,799 | 1,934 | 11,4 |
| 0,7 | 1,3 | 21,8 | 2,884 | 1,943 | 10,9 |
| 1,0 | 1,0 | 20,7 | 2,698 | 1,982 | 12,0 |
| 1,3 | 0,7 | 21,3 | 2,532 | 1,919 | 11,9 |
| 1,7 | 0,3 | 19,0 | 2,105 | 1,932 | 12,4 |
| 2,0 | – | 17,1 | 1,108 | 1,911 | 12,1 |
| **ungepress-te Platten** | | | | | |
| – | 2,0 | 14,8 | 4,272 | 1,555 | 20,1 |
| 0,3 | 1,7 | 14,7 | 3,820 | 1,567 | 19,9 |
| 0,7 | 1,3 | 14,5 | 4,133 | 1,557 | 19,8 |
| 1,0 | 1,0 | 13,6 | 3,740 | 1,539 | 21,2 |
| 1,3 | 0,7 | 13,8 | 4,010 | 1,500 | 23,7 |
| 1,7 | 0,3 | 13,1 | 3,205 | 1,532 | 20,8 |
| a2,0 | – | 12,4 | 1,902 | 1,514 | 21,9 |

Tabelle 4

Prüfresultate von Faserzement-Plättchen mit variablen PVA-PAN-Faser-Verhältnissen, hergestellt auf einer Filterpresse:

| Fasermischung PAN, PVA, 6mm 6mm Teile Teile | | Bie-gezug-festig-keit N/mm² | Bruch-arbeit kJ/m² | Dichte g/ccm | Wasser-aufnahme % |
|---|---|---|---|---|---|
| – | 2,0 | 14,2 | 2,603 | 1,753 | 19,9 |
| 0,3 | 1,7 | 14,4 | 2,512 | 1,758 | 19,8 |
| 0,7 | 1,3 | 13,9 | 2,543 | 1,752 | 19,7 |
| 1,0 | 1,0 | 13,9 | 2,527 | 1,754 | 19,8 |
| 1,3 | 0,7 | 13,7 | 2,410 | 1,732 | 19,9 |
| 1,7 | 0,3 | 13,1 | 1,700 | 1,748 | 19,6 |
| 2,0 | – | 12,2 | 0,975 | 1,731 | 19,8 |

Tabelle 5

Prüfresultate von Faserzement-Plättchen mit variablen PVA-PAN-Faser-Verhältnissen, hergestellt auf einer Hatschekmaschine.

| Fasermischung PAN, PVA, 6mm 4mm Teile Teile | | Bie-gezug-festig-keit N/mm² | Bruch-arbeit kJ/m₂ | Dichte g/ccm | Wasser-aufnahme aufnahme % |
|---|---|---|---|---|---|
| **gepresste Platten** | | | | | |
| – | 2,0 | 24,2 | 3,075 | 1,935 | 12,6 |
| 0,3 | 1,7 | 23,1 | 2,418 | 1,942 | 11,6 |
| 0,7 | 1,3 | 20,4 | 1,990 | 1,919 | 12,0 |
| 1,0 | 1,0 | 19,2 | 2,001 | 1,920 | 11,6 |
| 1,3 | 0,7 | 18,9 | 1,820 | 1,923 | 11,2 |
| 1,7 | 0,3 | 17,5 | 1,221 | 1,917 | 11,8 |
| 2,0 | – | 17,1 | 1,108 | 1,911 | 12,0 |

| Fasermischung PAN, PVA, 6mm 4mm Teile Teile | | Bie-gezug-festig-keit N/mm² | Bruch-arbeit kJ/m₂ | Dichte g/ccm | Wasser-aufnahme aufnahme % |
|---|---|---|---|---|---|
| **ungepress-te Platten** | | | | | |
| – | 2,0 | 15,0 | 4,519 | 1,550 | 22,6 |
| 0,3 | 1,7 | 14,7 | 4,095 | 1,541 | 22,4 |
| 0,7 | 1,3 | 14,2 | 3,465 | 1,528 | 21,9 |
| 1,0 | 1,0 | 13,4 | 2,968 | 1,536 | 20,4 |
| 1,3 | 0,7 | 13,1 | 2,436 | 1,532 | 20,4 |
| 1,7 | 0,3 | 12,7 | 2,150 | 1,521 | 21,3 |
| 2,0 | – | 12,4 | 2,100 | 1,514 | 21,9 |

Tabelle 6

Prüfresultate von Faserzement-Plättchen mit variablen PVA-PAN-Faser-Verhältnissen, hergestellt auf einer Filterpresse.

| Fasermischung PAN, PVA, 6mm 4mm Teile Teile | | Bie-gezug-festig-keit N/mm² | Bruch-arbeit kJ/m² | Dichte g/ccm | Wasser-aufnahme % |
|---|---|---|---|---|---|
| – | 2,0 | 14,8 | 2,429 | 1,807 | 18,7 |
| 0,3 | 1,7 | 15,3 | 2,510 | 1,823 | 17,7 |
| 0,7 | 1,3 | 14,0 | 2,010 | 1,779 | 18,6 |
| 1,0 | 1,0 | 13,5 | 1,619 | 1,785 | 18,2 |
| 1,3 | 0,7 | 12,9 | 1,327 | 1,761 | 18,8 |
| 1,7 | 0,3 | 12,5 | 0,902 | 1,750 | 18,7 |
| 2,0 | – | 12,4 | 0,945 | 1,747 | 18,9 |

Tabelle 7

Erfindungsgemäss hergestellte Faserzement-Plättchen mit variablen PVA-PAN-Faser-Verhältnissen, hergestellt auf einer Hatschekmaschine.

| Fasermischung PAN, PVA, 4mm 6mm Teile Teile | | Bie-gezug-festig-keit N/mm² | Bruch-arbeit kJ/m² | Dichte g/ccm | Wasser-aufnahme % |
|---|---|---|---|---|---|
| **gepresste Platten** | | | | | |
| – | 2,0 | 22,6 | 3,331 | 1,938 | 12,2 |
| 0,3 | 1,7 | 22,8 | 3,115 | 1,933 | 12,1 |
| 0,7 | 1,3 | 22,1 | 3,101 | 1,941 | 11,0 |
| 1,0 | 1,0 | 22,0 | 2,987 | 1,931 | 11,5 |
| 1,3 | 0,7 | 21,3 | 2,605 | 1,929 | 12,3 |
| 1,7 | 0,3 | 18,2 | 1,980 | 1,937 | 12,0 |
| 2,0 | – | 15,3 | 0,972 | 1,941 | 11,1 |
| **ungepress-te Platten** | | | | | |
| – | 2,0 | 15,1 | 4,657 | 1,548 | 22,3 |
| 0,3 | 1,7 | 15,2 | 4,450 | 1,551 | 22,0 |
| 0,7 | 1,3 | 14,8 | 4,522 | 1,550 | 21,9 |
| 1,0 | 1,0 | 14,8 | 4,186 | 1,542 | 22,6 |
| 1,3 | 0,7 | 14,1 | 3,475 | 1,553 | 21,9 |
| 1,7 | 0,3 | 12,9 | 2,497 | 1,561 | 20,7 |
| 2,0 | – | 11,7 | 1,303 | 1,568 | 19,9 |

Textilmechanische Eigenschaften der verwendeten Fasern in Tabelle 7.

PAN, 4 mm Titer 3,0 dtex, Zugfestigkeit 7,2 cN/dtex, E-Modul 1,52 cN/dtex, Bruchdehnung 9,8% PVA, 6 mm Titer 2,0 dtex, Zugfestigkeit 12,5 cN/dtex, E-Modul 250 cN/dtex, Bruchdehnung 6,5%.

## Patentansprüche

1. Mischung aus Polyacrylnitril- und Polyvinylalkoholfasern als Armierungsfasern für nach der Formgebung aushärtende Werkstoffe, insbesondere für hydraulisch abbindende Materialien, dadurch gekennzeichnet, dass die Fasermischung 50–90% Polyacrylnitrilfasern und 50–10% Polyvinylalkoholfasern enthält.

2. Mischung nach Anspruch 1, dadurch gekennzeichnet, dass die PAN-Fasern einen E-Modul von mindestens 130 cN/dtex, eine Bruchdehnung von höchstens 16% und eine Festigkeit von. mindestens 6 cN/dtex aufweisen.

3. Mischung nach Anspruch 1, dadurch gekennzeichnet, dass die PVA-Fasern einen E-Modul von mindestens 175 cN/dtex, eine Bruchdehnung von höchstens 15% und eine Festigkeit von mindestens 10 cN/dtex aufweisen.

4. Mischung nach den Ansprüchen 1–3, dadurch gekennzeichnet, dass die eingesetzten PVA- und PAN-Fasern Titer von 0,5–10 dtex aufweisen.

5. Mischung nach einem oder mehreren der Ansprüche 1–3, dadurch gekennzeichnet, dass die Länge der PAN-Fasern im Bereich von 2 bis 12 mm liegt.

6. Mischung nach einem oder mehreren der Ansprüche 1–3, dadurch gekennzeichnet, dass die Länge der PVA-Fasern im Bereich von 4 bis 15 mm liegt.

7. Mischung nach einem oder mehreren der Ansprüche 1–6, dadurch gekennzeichnet, dass das bevorzugte Verhältnis der Schnittlängen der PVA-, resp. der PAN-Fasern 4:3 bis 3:2 beträgt.

8. Mischung nach einem oder mehreren der Ansprüche 1–7, dadurch gekennzeichnet, dass die Armierungsfasermischung noch Zuschlagstoffe, wie Zellstoffasern und/oder synthetischen Pulp als Prozesshilfen enthält.

9. Mischung nach Anspruch 8, in Kombination mit Füllstoffen bzw. Zuschlagstoffen, wie Quarzsand, amorphe Kieselsäure, Hochofenschlacken, Flugaschen, Puzzolane, Kalkstein und Glimmer.

10. Verwendung der Mischung nach einem oder mehreren der Ansprüche 1–9, für die Verstärkung von hydraulischen Bindemitteln, wie Zement, Gips, Erdkalisilikaten oder Erdalkalisilikaten oder Erdalkalialuminaten.

11. Verwendung nach Anspruch 10, zur Herstellung von faserverstärkten Formteilen, wie z. B. Platten, Wellplatten oder Rohren, wobei mit sämtlichen Mischungsbestandteilen eine verdünnte wässrige Aufschlämmung hergestellt und diese in die gewünschte Form und danach zum Abbinden gebracht wird.

12. Formteile, wie z. B. Platten, Wellplatten oder Rohre, hergestellt unter Verwendung eines Armierungsfasergemisches nach einem der Ansprüche 1–9.

13. Formteile nach Anspruch 12, dadurch gekennzeichnet, dass diese 1–5%, vorzugsweise 1,5–2,5% der Armierungsfasermischung enthalten.

## Claims

1. A mixture of polyacrilnitrile and polyvinylalcohol fibres as reinforcing fibres for materials setting after the molding thereof, specifically for hydraulically setting materials, characterized in that said mixture of fibres comprises 50–90% polyacrilnitrile fibres and 50–10% polyvinylalcohol fibres.

2. The mixture according to claim 1, characterized in that the PAN-fibres have a modulus of elasticity of at least 130 cN/dtex, a maximal elongation at rupture of 16% and a strength of at least 6 cN/dtex.

3. The mixture according to claim 1, characterized in that the PVA-fibres have a modulus of elasticity of at least 175 cN/dtex, a maximal elongation at rupture of 15% and a strength of at least 10 cN/dtex.

4. The mixture according to claims 1–3, characterized in that the used PVA- and PAN-fibres comprise titers in the range of 0.5–10 dtex.

5. The mixture according to one or more of claims 1–3, characterized in that the length of the PAN-fibres is in the range of 2 to 12 mm.

6. The mixture according to one or more of claims 1–3, characterized in that the length of the PVA-fibres is in the range of 4 to 15 mm.

7. The mixture according to one or more of claims 1–6, characterized in that the preferred ratio of the cut length of the PVA- and PAN-fibres, respectively, amounts to about 4:3 to 3:2.

8. The mixture according to one or more of claims 1–7, characterized in that reinforcing fibre mixture further contains additives, such as cellulose fibres and/or synthetical pulp as process aids.

9. The mixture according to claim 8, in combination with fillers and additives respectively, such as quartz sand, amorphous silicic acid, blast furnace slage, fly ashes, puzzolane, limestone and mica.

10. Use of the mixture according to one or more of claims 1–9 for reinforcing hydraulically setting materials such as cement, gypsum, earth alkaline-silicates or earth alkaline-aluminates.

11. The use according to claim 10, for the production of fibre reinforced shaped articles, such as e. g. plates, corrugated plates and tubes, whereby a diluted, hydrous suspension is produced from said materials, which hydrous suspension is produced and moulded into the desired shape and set thereafter.

12. Shaped articles, such as e. g. plates, corrugated plates or tubes, produced by utilization of a mixture of reinforcing fibres according to one of claims 1–9.

13. Shaped articles according to claim 12, characterized in that they contain 1–5%, preferably 1,5–2,5% of the reinforcing fibre mixture.

**Revendications**

1. Mélange de fibres en polyacrylonitrile et en alcool polyvinylique comme fibres d'armature pour matériaux durcissants après leur mise en forme , notamment pour matériaux à prise hydraulique, caractérisé en ce que le mélange de fibres contient 50–90% de fibres en polyacrylonitrile et 50–10% de fibres en alcool polyvinylique.

2. Mélange selon la revendication 1, caractérisé en ce que les fibres en PAN présentent un coefficient d'élasticité E d'au moins 130 cN/dtex, une élongation à la rupture maximale de 16% et une résistance d'au moins 6 cN/dtex.

3. Mélange selon la revendication 1, caractérisé en ce que les fibres en APV présentent un coefficient d'élasticité E d'au moins 175 cN/dtex, une élongation à la rupture maximale de 15% et une résistance d'au moins 10 cN/dtex.

4. Mélange selon les revendications 1–3, caractérisé en ce que les fibres en APV et en PAN utilisées présentent un titre de 0,5–10 dtex.

5. Mélange selon une ou plusieurs des revendications 1–3, caractérisé en ce que la longueur des fibres en PAN est dans la gamme de 2 à 12 mm.

6. Mélange selon une ou plusieurs des revendications 1–3, caractérisé en ce que la longueur des fibres en APV est dans la gamme de 4 à 15 mm.

7. Mélange selon une ou plusieurs des revendications 1–6, caractérisé en ce que le rapport préféré des longueurs de coupe entre les fibres en APV et en PAN respectivement est de 4:3 à 3:2.

8. Mélange selon une ou plusieurs des revendications 1–7, caractérisé en ce que le mélange de fibres d'armature contient en plus des additifs, comme des fibres cellulosiques et/ou une pâte synthétique comme agent auxiliaire de procédé.

9. Mélange selon la revendications 8, en combinaison avec des matières de charge ou additifs respectivement, comme du sable silicieux, de l'acide silicique amorphe, des scories du haut fourneau, des cendres volantes, des pouzzolanes, du calcaire et du mica.

10. Utilisation du mélange selon une ou plusieurs des revendications 1–9, pour l'armature de liants hydrauliques, comme ciment, gypse, silicates alcalino-terreux ou aluminates alcalino-terreux.

11. Utilisation selon la revendication 10, pour la fabrication d'objets façonnés à armature en fibres, comme p. ex. des panneaux, panneaux ondulés ou tuyaux, en préparant une suspension aqueuse diluée avec tous les constituants du mélange et en mettant cette suspension dans la forme désirée pour la faire durcir ensuite.

12. Objets façonnés, comme p. ex. des panneaux, panneaux ondulés ou tuyaux, fabriqués en utilisant un mélange de fibres d'armature selon l'une des revendications 1–9.

13. Objets façonnés selon la revendication 12, caractérisés en ce qu'ils contiennent 1–5%, de préférence 1,5–2,5% du mélange de fibres d'armature.